# NOUVEAU FASCICULE DE BREVET EUROPEEN

(11) **EP 0 798 136 B2**
(45) Date de publication et mention de la décision concernant l'opposition: **07.08.2002**
(45) Mention de la délivrance du brevet: 25.08.1999
(21) Numéro de dépôt: 97400635.5
(22) Date de dépôt: 21.03.1997
(51) Int. Cl.: B60B 17/00

(54) **Roue de chemin de fer à faible déjettement en acier**
Krümmungsfestes Schienenfahrzeugrad aus Stahl
Bending resistant railway vehicle wheel of steel

(30) Priorité: 29.03.1996 FR 9603942
(43) Date de publication de la demande: 01.10.1997
(73) Titulaire: VALDUNES, 92800 Puteaux (FR)
(72) Inventeur: Brouke, Jacques, 59210 Coudekerque Branche (FR); Gaborit, Gervais, 77590 Bois le Roi (FR); Demilly, François, 59240 Dunkerque (FR); Catot, Bernard, 59943 Leffrinckoucke (FR)
(74) Mandataire: Bouget, Lucien

(56) Documents cités:
- EP-A- 0 082 273
- EP-A- 0 416 103
- DE-A- 2 726 871
- FR-A- 2 217 197
- FR-A- 2 485 993
- FR-A- 2 687 098
- GB-A- 2 180 807
- SU-A- 885 083
- US-A- 4 471 990
- US-A- 5 333 926
- "Optimization of a railway freight car wheel by use of f ctorial design method" Journal of Rail and Rapid Transit, p 97-107, n Mechanical Engeneers vol.208

## Description

La présente invention concerne une roue de chemin de fer présentant un faible déjettement lorsqu'elle est freinée par sabot. Cette roue peut être une roue pour wagon lourdement chargé. Elle peut, également être une roue pour train à grande vitesse pour voyageurs, et en particulier une roue pour train à grande vitesse du type pendulaire pouvant rouler jusqu'à 240 km/h environ.

On connaît de nombreuses roues de chemin de fer constituées d'une jante, d'un moyeu et d'un disque ou toile assurant la liaison entre le moyeu et la jante. Afin d'alléger les roues, ce qui nécessite de minimiser les contraintes engendrées dans la roue notamment par l'échauffement provoqué par les freinages par sabot frottant sur la jante, on donne à la ligne méridienne de la toile une forme curviligne possédant un point d'inflexion à proximité de la jante. C'est en particulier le cas pour la roue de chemin de fer décrite dans la demande de brevet FR-A-2 687 098. qui divulgue les caractéristiques du préambule de la revendication 1.

Les contraintes et les dilatations engendrées dans la roue par les freinages provoquent une déformation de la toile, appelée déjettement, qui modifie la position axiale de la jante par rapport au moyeu, de telle sorte que l'écartement des jantes des deux roues d'un même essieu est soit augmenté, soit réduit, cela dépend de la géométrie de la roue. Lorsque le déjettement conduit à réduire l'écartement des jantes, le passage d'appareils de voie tels que les aiguillages est rendu difficile, ce qui peut conduire à des déraillements si la déformation est trop importante. Aussi, on préfère choisir une géométrie de roue qui tend à écarter les jantes. Cependant, pour ce type de roue, le déjettement tend à faire frotter les boudins sur le flanc des rails, ce qui entraîne une usure supplémentaire. Dans les deux cas, pour éviter les difficultés engendrées par un déjettement trop important, on limite les échauffement en service des roues en limitant la charge par essieu. Cela est particulièrement vrai sur les lignes de chemin de fer dont le profil nécessite des freinages longs. C'est le cas, par exemple, des lignes qui franchissent des cols dans les régions montagneuses.

On distingue le déjettement à chaud existant pendant les périodes de freinage, et le déjettement résiduel après refroidissement de la roue résultant de déformations permanentes engendrées par les échauffements. Le déjettement résiduel, lui aussi, dépend de la géométrie de la roue et doit être minimisé.

La roue décrite dans la demande de brevet FR-A-2 687 098, de par son dessin, présente un faible déjettement résiduel. Mais elle présente, néanmoins, comme toutes les roues allégées, une sensibilité au déjettement qui limite notablement les conditions d'exploitation qu'on peut lui faire accepter. Ces limitations rendent ces roues inaptes à l'utilisation sur des wagons de fret lourdement chargés, en particulier sur les routes de montagne.

De plus, les échauffements successifs engendrent dans la roue des contraintes résiduelles de traction relativement importantes qui limitent sa tenue en service.

Le problème du déjettement, et plus généralement de la stabilité géométrique en service, se pose également pour les roues de trains à grande vitesse pour voyageurs, et plus particulièrement pour les roues destinées aux trains du type pendulaire. En effet, ces trains qui roulent à des vitesses pouvant atteindre, voire dépasser 240 km/h, d'une part, circulent sur des voies banalisées, c'est à dire dont le profile n'est pas tracé spécialement pour permettre la grande vitesse, d'autre part, sont équipés d'un freinage mixte par disques montés sur les essieux et par sabots. Du fait de ces conditions d'exploitation, il est très préférable que les roues aient une toile dont la ligne méridienne est curviligne, afin de leur donner suffisamment d'élasticité radiale et axiale, et pour qu'elles se déforment le moins possible sous l'effet des freinages successifs ou sous l'effet de freinages très importants, en particulier lors d'arrêts d'urgence. Ces conditions sont nécessaires pour assurer la sécurité des train. Cependant, cette élasticité et cette stabilité dimensionnelle ne sont pas suffisants pour ce type de trains. En effet, les efforts aux quels sont soumises les roues peuvent engendrer des ruptures catastrophiques par fatigue, ruptures qui doivent, à tout prix, être évitées, car elles sont très dangereuses, et d'autant plus dangereuses qu'elles se produisent lorsque le train roule vite.

Le but de la présente invention est de remédier à ces inconvénients en proposant une roue de chemin de fer allégée à faible sensibilité au déjettement aussi bien à chaud que résiduel, dont le niveau des contraintes résiduelles de traction sont très sensiblement réduites, ces roues étant, éventuellement, adaptées aux trains à grande vitesse pour voyageurs du type pendulaire.

A cet effet, l'invention a pour objet une roue de chemin de fer de révolution autour d'un axe XX' perpendiculaire à un plan médian P, du type comprenant une jante comportant une surface de roulement et un boudin, un moyeu, une toile, une zone de liaison de la toile avec la jante, une zone de liaison de la toile avec le moyeu, la section de la toile étant construite le long d'une ligne méridienne AB s'étendant entre un point A situé à la jonction de la toile et de la zone de liaison de la toile avec la jante, et un point B situé à la jonction de la toile et de la zone de liaison de la toile avec le moyeu, les deux points A et B étant situés de part et d'autre du plan médian P et étant symétriques l'un de l'autre par rapport au point d'intersection I de la ligne méridienne AB et du plan P; le point I étant un point d'inflexion pour la courbe AB.

De préférence, la distance du point I à l'axe XX' est comprise entre 0,5 et 0,65 fois le rayon extérieur de la roue. Il est également préférable que la tangente T_{A} à la courbe AB au point A et T_{B} à la courbe AB au point B soient parallèles au plan P.

L'effet du déjettement à chaud sur la stabilité sur les voies est minimale lorsque le point A est situé du même côté du plan P que le boudin (3).

Afin d'alléger au maximum la roue, il est préférable que, le long de la ligne AB, l'épaisseur e de la toile décroisse régulièrement depuis le point B jusqu'au point A, et que, par exemple, la décroissance soit linéaire en fonction de la distance au point B mesurée le long de la ligne AB. Le rapport de l'épaisseur au point A à l'épaisseur au point B étant, de préférence, compris entre 0,5 et 0,55.

Enfin, il est souhaitable que la roue soit centrée ; la distance du plan P à la face externe du boudin étant comprise entre 70 et 85 mm, environ.

Lorsque la roue est destinée à équiper un train à grande vitesse de type pendulaire pouvant rouler jusqu'à 240 km/h, il est préférable qu'elle soit constituée d'un acier dont la composition chimique comprend, en poids :
0,470 % ≤ C ≤ 0,570 %
0,600 % ≤ Mn ≤ 0,850 %
0,150% ≤ Si ≤ 0,400 %
S ≤ 0,010 %
P ≤ 0,020 %
Ni ≤ 0,300 %
Cr ≤ 0,300 %
Mo ≤ 0,080 %
Cu ≤ 0,300 %
V ≤ 0,050 %
Al ≤ 0,025 %
Ti ≤ 0,070 %
H ≤ 0,0002 %
O ≤ 0,0015 %
N ≤ 0,0080 %

le reste étant du fer et des impuretés résultant de l'élaboration, et que, en outre :
- la propreté inclusionnaire, contrôlée par comparaison à des images type selon la norme ASTM E45, soit telle que les cotations A, B, C, D sont inférieures aux valeurs maximales suivantes :

| types d'inclusions | A sulfures | B aluminates | C silicates | D oxydes |
|---|---|---|---|---|
| fins | 1,5 | 1,5 | 1,5 | 1,5 |
| épais | 1,5 | 1 | 1 | 1,5 |

la somme des valeurs B+C+D soit inférieure ou égale à 3,
- l'indice ASTM de taille du grain soit supérieur ou égal à 7, au maximum 20 % de grains ayant un indice ASTM égal à 6,
- la dureté sur la face latérale de la jante soit comprise entre 255 et 321 HB et reste supérieure à 255 HB au moins jusqu'à 35 mm en dessous de la surface de roulement correspondant au dernier profilage,
- les caractéristiques de traction et de résilience soient les suivantes :

| | Jante | Toile |
|---|---|---|
| Rm | 820 /940 MPa | δRm/jante* ≥ 110 MPa |
| Re | ≥ 550 MPa | ≥ 420 MPa |
| A% | ≥ 14% | ≥ 16 % |
| Ku à 20 °C | ≥ 17 J** | |
| Kv à - 30 °C | ≥ 10 J** | |

| | | |
|---|---|---|
| * écart Rm jante -Rm toile | | |
| ** moyenne de 3 essais | | |

- le contrôle par ultrasons de toute la plage d'usure de la bande de roulement, effectué conformément à la spécification AAR M107 section 18, ne fasse pas apparaître de défauts équivalents à un trou de 2 mm de diamètre ou plus.

Ces conditions permettent, notamment, d'éviter des ruptures de jantes par fissuration en cours d'exploitation.

L'invention va maintenant être décrite de façon plus précise, mais non limitative, en regard de la figure qui représente une demi section méridienne d'une roue pour train à grande vitesse du type pendulaire.

Le principe général qui guide la conception de la géométrie de la roue selon l'invention étant le même qu'il s'agisse d'une roue de wagon ou d'une roue pour train à grande vitesse, on va d'abord décrire le pricipe général sans référence à l'utilisation, puis on précisera la géométrie d'une roue pour train à grande vitesse du type pendulaire.

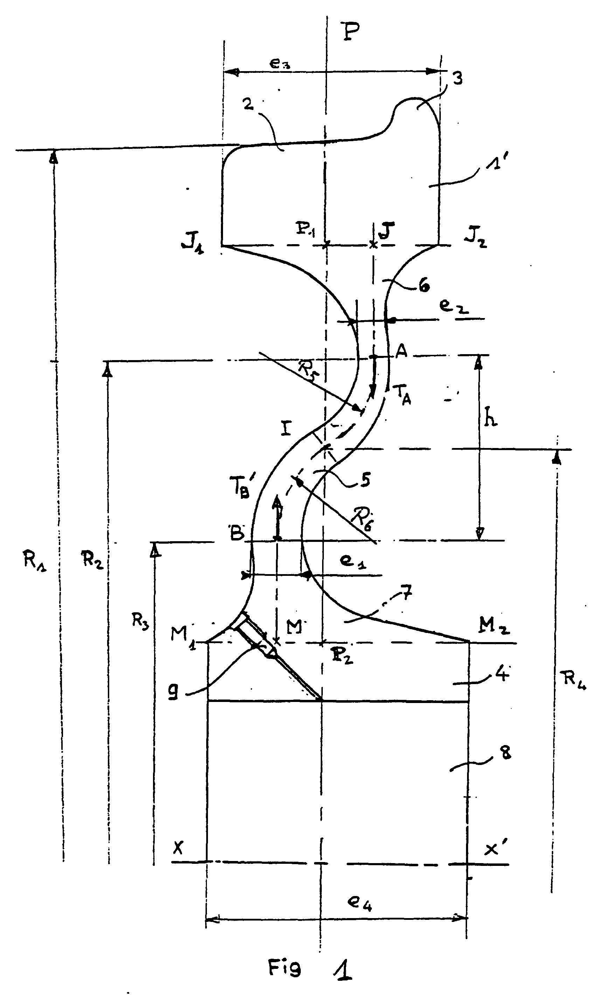

La roue de chemin de fer dont la demi section méridienne est représentée à la figure 1 est une pièce de révolution autour d'un axe XX' perpendiculaire à un plan médian P. La roue comporte à sa périphérie une jante 1 dont la mi-épaisseur se trouve dans le plan P. La jante 1 comporte une surface de roulement 2 et un boudin 3. Dans son axe, la roue comporte un moyeu 4 ayant un alésage axial 8 destiné à recevoir une fusée d'essieu. Une toile 5 assure la liaison entre le moyeu 4 et la jante 5 par l'intermédiaire d'une zone de liaison de la toile avec la jante 6 et d'une zone de liaison de la toile avec le moyeu 7. La section de la toile 5 est construite le long d'une ligne méridienne AB s'étendant entre un point A situé à la jonction de la toile 5 et de la zone de liaison de la toile avec la jante 6, et un point B situé à la jonction de la toile 5 et de la zone de liaison de la toile avec le moyeu 7. Les deux points A et B sont situés de part et d'autre du plan médian P et sont symétriques l'un de l'autre par rapport au point d'intersection I de la ligne méridienne AB et du plan P. Le point I est un point d'inflexion pour la courbe AB. Les portions de courbe AI et IB sont sensiblement des arcs de cercle dont le rayon R est supérieur à la moitié de la distance radiale h (distance mesurée parallèlement au plan P) entre le point A et le point B. Plus généralement, les portions de courbe Al et BI sont symétriques l'une de l'autre par rapport au point I.

La distance du point I à l'axe XX' est comprise entre 0,5 et 0,65 fois rayon extérieur de la roue, ce rayon étant la distance du point C d'intersection du plan P avec la surface de roulement 2 à l'axe XX' lorsque la roue est neuve, et la distance du point C' à l'axe XX' lorsque la roue est usée.

La tangente T_{A} à la courbe AB au point A coupe la trace J₁J₂ de la limite entre la toile et la jante, en un point J , et, la tangente T_{B} à la courbe AB au point B coupe la trace M₁M₂ de la limite entre la toile et le moyeu, en un point M. La trace J₁J₂ coupe la trace du plan P en un point P₁, et la trace M₁M₂ coupe la trace du plan P en un point P₂. Les distances P₁J et P₂M sont sensiblement égales, c'est à dire, égales, aux tolérances de fabrication près. De préférence, telles que les tangentes T_{A} et T_{B} soient parallèles au plan P, aux tolérances de fabrication près.

Le point A est situé du même côté du plan P que le boudin 3.

Le long de la ligne AB, l'épaisseur e de la toile décroît régulièrement, sensiblement linéairement, depuis le point B jusqu'au point A.

Enfin, la roue de chemin de fer est centrée, ce qui signifie que le plan P est à la fois à mi-épaisseur de la jante et à mi-épaisseur du moyeu.

C'est d'abord la disposition des points A et B, symétriquement par rapport au point I, et le fait que le point I est un point d'inflexion de la courbe AB, qui limite le déjettement. Avec cette disposition, l'échauffement engendré par le freinage tend à déformer la ligne AB parallèlement au plan P. Le déjettement est d'autant plus limité que le point d'inflexion I est situé aux environs du mi-rayon de la roue. Il est également limité lorsque les tangentes T_{A} et T_{B} sont sensiblement parallèles au plan P.

La courbe AB n'est pas nécessairement constituée de deux arcs de cercle. Elle peut être, par exemple, une portion de courbe du troisième degré.

Le point A n'est pas obligatoirement du même côté du plan P que le boudin, cependant, cette disposition est favorable car l'éventuel déjettement à tend à augmenter l'écartement des roues, ce qui est favorable à une bonne stabilité sur la voie.

Le fait pour la roue d'être centrée n'est pas, non plus, obligatoire, mais il permet de limiter les contraintes de flexion rotative dans les fusées d'essieu.

Enfin, la variation progressive de l'épaisseur de la toile permet d'alléger au maximum la roue, en particulier lorsque la toile est brute de forge. L'allégement est rendu possible, en particulier parce que les efforts dynamiques axiaux les plus importants que doit supporter la toile se situent au voisinage du moyeu. Il n'est donc pas nécessaire que l'épaisseur de la toile au voisinage de la jante soit aussi importante qu'au voisinage du moyeu.

Il faut remarquer qu'une roue de chemin de fer est soit une pièce forgée, soit une pièce moulée, c'est à dire une pièce ayant une certaine imprécision géométrique, aussi, les caractéristiques qui viennent d'être décrites ne sont que "sensiblement" réalisées, c'est à dire à quelques mm près.

La roue ainsi réalisée est particulièrement adaptée aux wagons dont la charge par essieu peut atteindre 25 Tonnes et qui doivent pouvoir supporter une puissance de freinage par roue pouvant atteindre 40 kW pendant 30 minutes.

La roue est également adaptée aux trains à grande vitesse du type pendulaire, pouvant rouler jusqu'à 240 km/heure au moins. Dans ce cas, de façon préférentielle, la roue comporte un plan de symétrie P passant par la mi-épaisseur de la jante 1, mais elle n'est pas tout à fait centrée puisque le moyeu 4 est un peu décalé du côté du boudin 3. La toile 5 est construite autour d'une ligne méridienne AB ayant un point d'inflexion I situé dans le plan P. Le rayon extérieur R₁ de la roue neuve est de 457,2 mm, les points A et B sont situés sur des cercles de rayons respectifs R₂ = 316,2 mm et R₃ = 204,6 mm, si bien que le point I est situé sur un cercle de rayon R₄ = 260,4 mm. Le rapport R₄/R₁ est de 0,57. La distance radiale h entre les point A et B est de 111,6 mm. Les segments Al et IB de la ligne méridienne sont des arcs de cercle de rayons respectifs R₅ = 65 mm et R₆ = 65 mm, tous les deux supérieurs à la moitié de la distance radiale h. L'épaisseur de la toile, qui est e₁ = 32 mm du côté du moyeu, décroît régulièrement jusqu'à e₂ = 19,05 mm du côté de la jante, et cette décroissance est quasiment linéaire. Les tangentes T_{A} et T_{B} aux points A et B sont parallèles au plan P. Le point d'intersection J de la tangente avec la ligne J₁J₂, trace de la limite entre la toile 5 et la jante 1, est situé du côté du boudin 3, à une distance de 32,2 mm du plan P. Le point d'intersection M de la tangente T_{B} avec la ligne M₁M₂, trace de la limite entre la toile 5 et le moyeu 4, est situé du côté opposé au boudin 3, à une distance de 27,8 mm du plan P. L'épaisseur e₃ de la jante est de 136,5 mm, le moyeu a une épaisseur e₄ = 169,1 mm, et le plan P est situé à une distance axiale de 69,9 mm de la face du moyeu située du côté opposé au boudin. La surface latérale de la jante, côté boudin, est disposée en retrait de 22,225 mm par rapport à la surface latérale du moyeu située du côté du boudin. En outre, la roue comporte un trou 9 d'injection d'huile qui débouche dans l'alésage 8 du moyeu 4, et qui est destiné à injecter de l'huile sous pression pour faciliter le démontage de la roue lorsque celle-ci est montée sur un essieu.

La roue ainsi dessinée a une bonne élasticité axiale et radiale et une bonne résistance aux freinages : le déjettement est faible et les contraintes résiduelles dans la zone de raccordement entre la jante et la toile restent des contraintes de compression.

Les dimensions exactes de la roue qui viennent d'être données ci-dessus sont optimisées pour une application particulière et peuvent être modifiées, en tant que de besoin, par l'Homme du Métier pour les adapter à des conditions d'utilisation un peu différentes.

Ces roues peuvent être réalisées en tout acier défini par les normes relatives aux aciers pour roues de chemin de fer, et notamment par la spécification américaine AAR M-107 du 2/01/1994. Cependant, les inventeurs ont constaté que le respect des caractéristiques imposées par ces normes n'était pas suffisant pour éviter des ruptures catastrophiques en service lorsque les roues sont montées sur des trains à grande vitesse. Les inventeurs ont constaté par contre que, pour assurer la sécurité dans les conditions d'exploitation d'un train pendulaire circulant sur une voie banalisée à une vitesse pouvant atteindre 240 km/h, la roue devait être forgée pour obtenir une compacité suffisante, et être constitué d'un acier ayant les caractéristiques suivantes :

### a) composition chimique, en % en poids :

0,470 % ≤ C ≤ 0,570 %
0,600 % ≤ Mn ≤ 0,850 %
0,150 % ≤ Si ≤ 0,400 %
S ≤ 0,010 %
P ≤ 0,020 %
Ni ≤ 0,300 %
Cr ≤ 0,300 %
Mo ≤ 0,080 %
Cu ≤ 0,300 %
V ≤ 0,050 %
Al ≤ 0,025 %
Ti ≤ 0,070 %
H ≤ 0,0002 %
O ≤ 0,0015 %
N ≤ 0,0080 %
le reste étant du fer et des impuretés résultant de l'élaboration.

### b) propreté inclusionnaire :

contrôlée par comparaison à des images type selon la norme ASTM E 45, les valeurs doivent rester inférieures aux valeurs maximales suivantes :

| types d'inclusions | A sulfures | B aluminates | C silicates | D oxydes |
|---|---|---|---|---|
| fins | 1,5 | 1,5 | 1,5 | 1,5 |
| épais | 1,5 | 1 | 1 | 1,5 |

de plus la somme des valeurs B+C+D doit rester inférieure ou égale à 3.

### c) taille de grain :

Le grain doit être fin et d'indice ASTM supérieur ou égal à 7, on peut admettre au plus 20 % de grains d'indice ASTM égal à 6.

### d) caractéristiques mécaniques :

La dureté doit être comprise entre 255 et 321 HB sur la face latérale de la jante et rester supérieure à 255 HB au moins jusqu'à 35 mm en dessous de la surface de roulement correspondant au dernier profilage.

Les caractéristiques de traction et de résilience doivent être les suivantes :

| | Jante | Toile |
|---|---|---|
| Rm | 820/940 MPa | δRm/jante* ≥ 110 Mpa |
| Re | ≥ 550 MPa | ≥ 420 MPa |
| A % | ≥ 14 % | ≥ 16 % |
| Ku à 20 °C | ≥ 17 J** | |
| Kv à - 30 °C | ≥ 10 J** | |

| | | |
|---|---|---|
| * écart Rm jante -Rm toile | | |
| ** moyenne de 3 essais | | |

### e) Contrôles par ultrasons :

le contrôle par ultrasons de toute la plage d'usure de la bande de roulement, effectué conformément à la spécification AAR M107 section 18, ne doit pas faire apparaître de défauts équivalents à un trou de 2 mm de diamètre.

La composition chimique est choisie pour obtenir par trempe de la jante une structure ferrito-perlitique ayant les caractéristiques mécaniques souhaitées. Les caractéristiques mécaniques de la jante et la dureté permettent de limiter les écaillages et les déformations de la table de roulement. En particulier, la limite d'élasticité est choisie pour obtenir une résistance suffisante aux efforts de cisaillement sous la table de roulement et ainsi éviter les déformations de celle-ci qui engendrent des pertes de stabilité de la voiture équipée de la roue. Les caractéristiques mécaniques de la toile permettent de dessiner une roue légère qui résiste bien aux efforts dynamiques en service. La différence de résistance à la traction Rm entre la jante et la toile permet d'obtenir des contraintes résiduelles de traction dans la zone de liaison entre la toile et la jante. La combinaison entre les caractéristiques mécaniques de la jante, en particulier la résilience, la propreté inclusionnaire et les résultats de contrôle par ultrasons, permet d'éviter la perte de secteurs de jante par fissuration en cours d'exploitation, ce type d'incident étant particulièrement dangereux.

La teneur minimale en carbone est fixée pour permettre d'obtenir une dureté suffisante pour limiter l'usure de la roue par roulement. La teneur maximale est fixée pour limiter l'usure de la roue engendré par le freinage par sabots qui engendre des échauffements superficiels très importants pouvant conduire à la formation de lentilles de martensite d'autant plus fragiles que la teneur en carbone est élevée. De plus, il est préférable de limiter la teneur en carbone pour obtenir une dureté de la table de roulement pas trop supérieure à celle des rails afin de limiter l'usure de ceux - ci.

Pour certaines roues freinées uniquement par disques, comme les roue de locomotive qui travaillent dans des conditions un peu différentes de celles des roues de voiture, on peut choisir une teneur en carbone un peu plus élevée, comprise entre 0,570 % et 0,670 %. La dureté doit alors être comprise entre 277 et 341 HB sur la face latérale de la jante et rester supérieure à 277 HB au moins jusqu'à 35 mm en dessous de la surface de roulement correspondant au dernier profilage.

Les caractéristiques de traction et de résilience doivent être les suivantes :

| | Jante | Toile |
|---|---|---|
| Rm | 920/1150 MPa | δRm/jante* ≥ 110 MPa |
| Re | ≥ 680 MPa | ≥ 450 MPa |
| A% | ≥ 12 % | ≥ 14% |
| Ku à 20 °C | ≥ 10 J** | |
| Kv à - 30 °C | ≥ 6 J** | |

Toutes les autres caractéristiques, notamment la propreté et le résultats des contrôles par ultrasons, doivent être identiques à celle qui ont été définies dans le cas précédent.

On peut noter que, lorsque la roue n'est pas du tout freinée par sabots, la toile de la roue peut être droite, mais les caractéristiques mécaniques et de propreté, notamment, doivent être respectées pour éviter les ruptures en service.

A titre d'exemple et de comparaison, on a fabriqué des roues pour train pendulaire pouvant rouler jusqu'à 240 km/h, ayant les caractéristiques suivantes :

### 1) série n°1, conforme à l'invention :

- roue pour voiture à toile en S telle que décrite ci-dessus, freinage mixte, 85 % par disques, 15% par sabots.
- composition chimique du métal (en 10⁻³ % en poids) :

| C | Mn | Si | S | P | Cr | Ni | Mo | Cu | Al | V | Ti | H | O | N |
|---|---|---|---|---|---|---|---|---|---|---|---|---|---|---|
| 485 | 810 | 395 | 4 | 11 | 245 | 195 | 30 | 143 | 20 | - | - | 0,15 | 1,1 | 7 |

- caractéristiques mécaniques :

| | Jante | Toile |
|---|---|---|
| Rm | 925 MPa | 710 MPa |
| Re | 638 MPa | 482 MPa |
| A% | 17 % | 18 % |
| Ku à 20 °C | 18/20/19 J* | |
| dureté | 295 HB | |

| | | |
|---|---|---|
| * trois valeurs | | |

- propreté inclusionnaire:

| types d'inclusions | A sulfures | B aluminates | C silicates | D oxydes |
|---|---|---|---|---|
| fins | 0,5 | 0 | 0 | 0,5 |

- contrôles par ultrasons :
pas de défauts équivalents à des trous de 2 mm de diamètre.

- structure et taille de grain :
ferrite-perlite, grain ASTM 8

### 2) série n°2, à titre de comparaison :

- roue pour locomotive à toile droite, freinage 100 % par disques.
- composition chimique du métal (en 10⁻³ % en poids) :

| C | Mn | Si | S | P | Cr | Ni | Mo | Cu | Al | V | Ti | H | O | N |
|---|---|---|---|---|---|---|---|---|---|---|---|---|---|---|
| 616 | 795 | 380 | 4 | 13 | 210 | 232 | 38 | 143 | 20 | - | - | 0,18 | 1,4 | 7 |

- caractéristiques mécaniques :

| | Jante | Toile |
|---|---|---|
| Rm | 1134 MPa | 917 MPa |
| Re | 782 MPa | 623 MPa |
| A% | 15% | 16% |
| Ku à 20 °C | 14/10/12 J* | |
| dureté | 330 HB | |

| | | |
|---|---|---|
| * trois valeurs | | |

- propreté inclusionnaire :

| types d'inclusions | A sulfures | B aluminates | C silicates | D oxydes |
|---|---|---|---|---|
| fins | 0,5 | 0 | 0 | 0,5 |

- contrôles par ultrasons :
pas de défauts équivalents à des trous de 2 mm de diamètre.

- structure et taille de grain :
ferrite-perlite, grain ASTM 8

### 3) série n°3, à titre de comparaison :

- roue pour voiture à toile droite, freinage mixte, 85 % par disques, 15% par sabots.
- composition chimique du métal (en 10⁻³ % en poids) :

| C | Mn | Si | S | P | Cr | Ni | Mo | Cu | Ai | V | Ti | H | O | N |
|---|---|---|---|---|---|---|---|---|---|---|---|---|---|---|
| 625 | 720 | 185 | 21 | 11 | 105 | 100 | 25 | 215 | 9 | - | - | 0,2 | 2 | 7 |

- caractéristiques mécaniques :

| | Jante | Toile |
|---|---|---|
| Rm | 992 MPa | 782 MPa |
| Re | 630 MPa | 394 MPa |
| A % | 14% | 16% |
| Ku à 20 °C | 7/10/6,5 J* | |
| dureté | 300 HB | |

| | | |
|---|---|---|
| * trois valeurs | | |

- propreté inclusionnaire :

| types d'inclusions | A sulfures | B aluminates | C silicates | D oxydes |
|---|---|---|---|---|
| épais | 1,5 | 3,5 | 0 | 0,5 |

- contrôles par ultrasons :
pas de défauts équivalents à des trous de 3 mm de diamètre.

- structure et taille de grain :
ferrite-perlite, grain ASTM 6

Les résultats d'exploitation de ces séries de roues ont été les suivants :

| Série | n°1 | n°2 | n°3 |
|---|---|---|---|
| Déjettement | faible | sans objet | fort |
| Ecaillage | faible | faible | moyen |
| Usure de la table de roulement | faible | faible | moyen |
| Déformation au roulement | faible | très faible | moyen |
| Rupture de jante (perte de | non | non | oui |
| secteurs) | | | |

Ces résultats font apparaître d'une part que la toile en S selon l'invention réduit de façon très sensible le déjettement (comparaison A et C), et surtout que les caractéristiques du métal selon l'invention permettent d'éviter les ruptures de la jante par fissuration.

## Revendications

1. Roue de chemin de fer de révolution autour d'un axe XX' perpendiculaire à un plan médian P, du type comprenant une jante (1) dont la mi-épaisseur se trouve dans le plan P, comportant une surface de roulement (2) et un boudin (3), un moyeu (4), une toile (5), une zone de liaison de la toile avec la jante (6), une zone de liaison de la toile avec le moyeu (7), la section de la toile (5) étant construite le long d'une ligne méridienne AB s'étendant entre un point A situé à la jonction de la toile (5) et de la zone de liaison de la toile avec la jante (6), et un point B situé à la jonction de la toile (5) et de la zone de liaison de la toile avec le moyeu (7), **caractérisée en ce que** les deux points A et B sont situés de part et d'autre du plan médian P et sont symétriques l'un de l'autre par rapport au point d'intersection I de la ligne méridienne AB et du plan P, le point I étant un point d'inflexion pour la courbe AB.

2. Roue de chemin de fer selon la revendication 1 **caractérisée en ce que** la distance du point I à l'axe XX' est comprise entre 0,5 et 0,65 fois rayon extérieur de la roue.

3. Roue de chemin de fer selon la revendication 1 ou 2 **caractérisée en ce que** la distance au plan P du point d'intersection J de la tangente T_{A} à la courbe AB au point A et de la trace J₁J₂ de la limite entre la toile et la jante, est égale à la distance au plan P du point d'intersection M de la tangente T_{B} à la courbe AB au point B et de la trace M₁M₂ de la limite entre la toile et le moyeu, et, de préférence, les tangentes T_{A} et T_{B} à la courbe AB aux points A et B sont parallèles au plan P.

4. Roue de chemin de fer selon l'une quelconque des revendications 1 à 3 **caractérisée en ce que** les portions de courbe Al et Bl sont symétriques l'une de l'autre par rapport au point I.

5. Roue de chemin de fer selon la revendication 4 **caractérisée en ce que** les portions de courbe Al et Bl sont des arcs de cercle.

6. Roue de chemin de fer selon la revendication 5 **caractérisée en ce que** les arcs de cercle ont un rayon R supérieur à la moitié de la distance radiale h entre les points A et B.

7. Roue de chemin de fer selon l'une quelconque des revendications 1 à 6 **caractérisée en ce que** le point A est situé du même côté du plan P que le boudin (3).

8. Roue de chemin de fer selon l'une quelconque des revendications 1 à 7 **caractérisée en ce que**, le long de la ligne AB, l'épaisseur e de la toile décroît régulièrement depuis le point B jusqu'au point A.

9. Roue de chemin de fer selon la revendication 8 **caractérisée en ce que** l'épaisseur e de la toile décroît linéairement en fonction de la distance au point B mesurée le long de la ligne AB.

10. Roue de chemin de fer selon l'une quelconque des revendications 1 à 9 **caractérisée en ce qu'**elle est centrée.

11. Roue de chemin de fer pour train à grande vitesse selon l'une quelconque des revendications 1 à 10 **caractérisée en ce qu'**elle est constituée d'un acier dont la composition chimique comprend, en poids :
0,470 % ≤ C ≤ 0,570 %
0,600 % ≤ Mn ≤ 0,850 %
0,150 % ≤ Si ≤ 0,400 %
S ≤ 0,010 %
P ≤ 0,020 %
Ni ≤ 0,300 %
Cr ≤ 0,300 %
Mo ≤ 0,080 %
Cu ≤ 0,300 %
V ≤ 0,050 %
Al ≤ 0,025 %
Ti ≤ 0,070 %
H ≤ 0,0002 %
O ≤ 0,0015 %
N ≤ 0,0080 %
le reste étant du fer et des impuretés résultant de l'élaboration, en outre,
- la propreté inclusionnaire, contrôlée par comparaison à des images type selon la norme ASTM E45, est telle que les cotations A, B, C, D sont inférieures aux valeurs maximales suivantes :
| types d'inclusions | A sulfures | B aluminates | C silicates | D oxydes |
|---|---|---|---|---|
| fins | 1,5 | 1,5 | 1,5 | 1,5 |
| épais | 1,5 | 1 | 1 | 1,5 |
la somme des valeurs B+C+D doit étant inférieure ou égale à 3,
- l'indice ASTM de taille du grain est supérieur ou égal à 7, au maximum 20 % de grains ayant un indice ASTM égal à 6,
- la dureté sur la face latérale de la jante est comprise entre 255 et 321 HB et reste supérieure à 255 HB au moins jusqu'à 35 mm en dessous de la surface de roulement correspondant au dernier profilage,
- les caractéristiques de traction et de résilience sont les suivantes :
| | Jante | Toile |
|---|---|---|
| Rm | 820/940 MPa | δRm/jante* ≥ 110 MPa |
| Re | ≥ 550 MPa | ≥ 420 MPa |
| A % | ≥ 14 % | ≥ 16 % |
| Ku à 20 °C | ≥ 17 J** | |
| Kv à - 30 °C | ≥ 10 J** | |
| | | |
|---|---|---|
| * écart Rm jante -Rm toile | | |
| ** moyenne de 3 essais | | |
- le contrôle par ultrasons de toute la plage d'usure de la bande de roulement, effectué conformément à la spécification AAR M107 section 18, ne fait pas apparaître de défauts équivalents à un trou de 2 mm de diamètre ou plus.

## Claims

1. Railway wheel with symmetry of revolution about an axis XX' perpendicular to a mid-plane P, of the type comprising a rim (1) the middle of the thickness of which is in the plane P and which has a running surface(2) and a flange (3), a hub (4), a centre (5), a region connecting the centre with the rim (6), a region connecting the centre with the hub (7), the cross section of the centre (5) being constructed along a central line AB extending between a point A located at the junction between the centre (5) and the region connecting the centre with the rim (6), and point B located at the junction between the centre (5) and the region connecting the centre with the hub (7), **characterized in that** the two points A and B are situated one on each side of the mid-plane P and are symmetric with each other with respect to the point of intersection I between the central line AB and the plane P, the point I being a point of inflection on the curve AB.

2. Railway wheel according to Claim 1, **characterized in that** the distance from the point I to the axis XX' is between 0.5 and 0.65 times the external radius of the wheel.

3. Railway wheel according to Claim 1 or 2, **characterized in that** the distance to the plane P from the point J where the tangent T_{A} to the curve AB at the point A and the plot J₁J₂ of the boundary between the centre and the rim intersect is equal to the distance to the plane P from the point M where the tangent T_{B} to the curve AB at the point B and the plot M₁M₂ of the boundary between the centre and the hub intersect, and, as a preference, the tangents T_{A} and T_{B} to the curve AB at the points A and B are parallel to the plane P.

4. Railway wheel according to any one of Claims 1 to 3, **characterized in that** the curve portions AI and BI are symmetric with one another with respect to the point I.

5. Railway wheel according to Claim 4, **characterized in that** the curve portions AI and BI are arcs of a circle.

6. Railway wheel according to Claim 5, **characterized in that** the arcs of a circle have a radius R which is greater than half the radial distance h between the points A and B.

7. Railway wheel according to any one of Claims 1 to 6, **characterized in that** the point A is located on the same side of the plane P as the flange (3).

8. Railway wheel according to any one of Claims 1 to 7, **characterized in that**, along the line AB, the thickness e of the centre decreases uniformly from the point B to the point A.

9. Railway wheel according to Claim 8, **characterized in that** the thickness e of the centre decreases linearly as a function of the distance to the point B measured along the line AB.

10. Railway wheel according to any one of Claims 1 to 9, **characterized in that** it is centred.

11. Railway wheel for a high-speed train according to any one of Claims 1 to 10, **characterized in that** it is made of a steel, the chemical composition of which comprises, by weight:
0.470% ≤ C ≤ 0.570%
0.600% ≤ Mn ≤ 0.850%
0.150% ≤ Si ≤ 0.400%
S ≤ 0.010%
P ≤ 0.020%
Ni ≤ 0.300%
Cr ≤ 0.300%
Mo ≤ 0.080%
Cu ≤ 0.300%
V ≤ 0.050%
Al ≤ 0.025%
Ti ≤ 0.070%
H ≤ 0.0002%
O ≤ 0.0015%
N ≤ 0.0080%
the rest being iron and impurities resulting from the production process, furthermore,
- the inclusions purity, checked by comparing with standard images according to the standard ASTM E45, is such that the measured values A, B, C, D are below the following maximum values:
| types of inclusion | A sulphides | B aluminates | C silicates | D oxides |
|---|---|---|---|---|
| fine | 1.5 | 1.5 | 1.5 | 1.5 |
| coarse | 1.5 | 1 | 1 | 1.5 |
the sum of the values B+C+D being less than or equal to 3
- the ASTM grain size index is greater than or equal to 7, at most 20% of the grains having an ASTM index equal to 6,
- the hardness on the lateral face of the rim is between 255 and 321 HB and remains higher than 255 HB at least as far as 35 mm beneath the running surface that corresponds to the last profiling operation,
- the tensile and resilience characteristics are as follows:
| | Rim | Centre |
|---|---|---|
| Rm | 820/940 MPa | δRm/rim* ≥ 110 MPa |
| Re | ≥ 550 MPa | ≥ 420 MPa |
| A% | ≥ 14% | ≥ 16% |
| Ku at 20°C | ≥ 17 J** | |
| Kv at -30°C | ≥ 10 J** | |
| | | |
|---|---|---|
| * difference Rm rim - Rm centre | | |
| ** average of 3 tests | | |
- ultrasonic inspection of the entire wearing area of the running strip, performed in accordance with specification AAR M107 section 18, reveals no defects equivalent to a hole 2 mm or more in diameter.

## Patentansprüche

1. Um eine Achse XX' senkrecht zu einer Mittelebene P drehendes Eisenbahnrad mit einem Radkranz (1), dessen Halb-Dicke sich in der Ebene P befindet, der eine Lauffläche (2) und einen Spurkranz (3) aufweist, mit einer Nabe (4), einer Radscheibe (5), einer Verbindungszone (6) der Radscheibe mit dem Radkranz, einer Verbindungszone (7) der Radscheibe mit der Nabe,
wobei der Schnitt der Radscheibe längs einer Meridianlinie AB konstruiert ist, die sich zwischen einem an der Verbindungsstelle der Radscheibe (5) und der Verbindungszone der Radscheibe mit dem Radkranz (6) gelegenen Punkt A und einem an der Verbindungsstelle der Radscheibe (5) und der Verbindungszone der Radscheibe mit der Nabe (7) gelegenen Punkt B erstreckt, **dadurch gekennzeichnet, daß** die beiden Punkte A und B auf gegenüberliegenden Seiten der Mittelebene P gelegen und beide symmetrisch in bezug auf den Schnittpunkt I der Meridianlinie AB mit der Ebene P sind, wobei der Punkt I ein Wendepunkt der Kurve AB ist.

2. Eisenbahnrad nach Anspruch 1, **dadurch gekennzeichnet, daß** die Entfernung des Punktes I von der Achse XX' zwischen dem 0,5- und 0,65-fachen äußeren Radius des Rades liegt.

3. Eisenbahnrad nach Anspruch 1 oder 2, **dadurch gekennzeichnet, daß** der Abstand zur Ebene P des Schnittpunktes J der Tangente T_{A} an die Kurve AB in dem Punkt A mit der Spur J₁J₂ an der Grenze zwischen der Radscheibe und dem Radkranz gleich dem Abstand zur Ebene P des Schnittpunktes M der Tangente T_{B} an die Kurve AB in dem Punkt B mit der Spur M₁M₂ an der Grenze zwischen der Radscheibe und der Nabe ist, und daß vorzugsweise die Tangenten T_{A} und T_{B} an die Kurve AB in den Punkten A bzw. B parallel zur Ebene P sind.

4. Eisenbahnrad nach einem der Ansprüche 1 bis 3, **dadurch gekennzeichnet, daß** die Kurvenabschnitte AI und BI zueinander in bezug auf den Punkt I symmetrisch sind.

5. Eisenbahnrad nach Anspruch 4, **dadurch gekennzeichnet, daß** die Kurvenabschnitte AI und BI Kreisbögen sind.

6. Eisenbahnrad nach Anspruch 5, **dadurch gekennzeichnet, daß** die Kreisbögen einen Radius R haben, der größer als die Hälfte der Radialdistanz h zwischen den Punkten A und B ist.

7. Eisenbahnrad nach einem der Ansprüche 1 bis 6, **dadurch gekennzeichnet, daß** der Punkt A auf der gleichen Seite der Ebene P wie der Spurkranz (3) gelegen ist.

8. Eisenbahnrad nach einem der Ansprüche 1 bis 7, **dadurch gekennzeichnet, daß** längs der Linie AB die Dicke e der Radscheibe gleichmäßig zwischen dem Punkt B und dem Punkt A abnimmt.

9. Eisenbahnrad nach Anspruch 8, **dadurch gekennzeichnet, daß** die Dicke e der Radscheibe linear als Funktion des Abstandes zum Punkt B abnimmt, gemessen längs der Linie AB.

10. Eisenbahnrad nach einem der Ansprüche 1 bis 9, **dadurch gekennzeichnet, daß** sie zentriert ist.

11. Eisenbahnrad für Hochgeschwindigkeitszüge nach einem der Ansprüche 1 bis 10, **dadurch gekennzeichnet, daß** es aus Stahl gebildet ist, dessen chemische Zusammensetzung in Gewichtsprozent enthält
0,470 % ≤ C ≤ 0,570 %
0,600 % ≤ Mn ≤ 0,850 %
0,150 % ≤ Si ≤ 0,400 %
S ≤ 0,010 %
P ≤ 0,020 %
Ni ≤ 0,300 %
Cr ≤ 0,300 %
Mo ≤ 0,080 %
Cu ≤ 0,300 %
V ≤ 0,050 %
Al ≤ 0,025 %
Ti ≤ 0,070 %
H ≤ 0,0002 %
O ≤ 0,0015%
N ≤ 0,0080 %
wobei der Rest Eisen und aus der Erzeugung resultierende Unreinheiten sind, daß weiterhin
- die Reinheit hinsichtlich der Einschlüsse, kontrolliert durch Vergleich mit typischen Bildern gemäß der Norm ASTM E45 so ist, daß die Maßangaben A, B, C, D kleiner als die folgenden Werte sind:
| Art der Einschlüsse | A Schwefel | B Aluminate | C Silikate | D Oxide |
|---|---|---|---|---|
| fein | 1,5 | 1,5 | 1,5 | 2,5 |
| groß | 1,5 | 1 | 1 | 1,5 |
wobei die Summe der Werte B+C+D kleiner oder gleich 3 soll,
- der ASTM-Index der Korngröße größer oder gleich 7 ist,
wobei maximal 20 % der Körner einen ASTM-Index gleich 6 haben,
- die Härte an der Seitenfläche des Radkranzes zwischen 255 und 321 HB liegt und größer als 255 HB zumindest bis 35 mm unter der Lauffläche entsprechend der letzten Profilierung verbleibt,
- die Zug- und Elastizitätseigenschaften die folgenden sind:
| | Radkranz | Radscheibe |
|---|---|---|
| Rm | 820 /940 MPa | δRm / jante* ≥ 110 MPa |
| Re | ≥ 550 MPa | ≥ 420 MPa |
| A% | ≥ 14% | ≥ 16% |
| Ku à 20 °C | ≥ 17 J** | |
| Kv à - 30°C | ≥ 10 J** | |
| | | |
|---|---|---|
| * Abstand Rm Radkranz - Rm Radscheibe | | |
| ** Mittelwert aus drei Versuchen | | |
- die Ultraschallkontrolle über den gesamten Betriebsbereich der Lauffläche, ausgeführt entsprechend der Spezifikation AAR M107 Abschnitt 18, keine Fehler äquivalent einem Loch von 2 mm Durchmesser oder größer erscheinen läßt.
